**Europäisches Patentamt**

**European Patent Office**

**Office européen des brevets**

(19)

(11) Veröffentlichungsnummer: **0 343 513 B1**

(12)  # EUROPÄISCHE PATENTSCHRIFT

(45) Veröffentlichungstag der Patentschrift:
31.07.91 Patentblatt 91/31

(51) Int. Cl.⁵ : **B23P 6/00, F16L 55/12**

(21) Anmeldenummer: **89108956.7**

(22) Anmeldetag: **18.05.89**

(54) **Einrichtung zum Stabilisieren eines Rohres eines Wärmetauschers.**

(30) Priorität: **25.05.88 DE 3817654**

(43) Veröffentlichungstag der Anmeldung:
**29.11.89 Patentblatt 89/48**

(45) Bekanntmachung des Hinweises auf die
Patenterteilung:
**31.07.91 Patentblatt 91/31**

(84) Benannte Vertragsstaaten:
**BE CH DE ES FR LI NL SE**

(56) Entgegenhaltungen:
**EP-A- 0 271 200**
**DE-A- 2 817 734**
**US-A- 4 799 305**

(73) Patentinhaber: **ABB Reaktor GmbH**
**Dudenstrasse 44**
**W-6800 Mannheim 1 (DE)**

(72) Erfinder: **Kalthoff, Wolfgang**
**Schiessmauerstrasse 24**
**W-6947 Laudenbach (DE)**
Erfinder: **Russ, Jakob**
**Germersheimer Strasse 87**
**W-6725 Römerberg 1 (DE)**

(74) Vertreter: **Rupprecht, Klaus, Dipl.-Ing. et al**
**c/o Asea Brown Boveri Aktiengesellschaft**
**Zentralbereich Patente Postfach 100351**
**W-6800 Mannheim 1 (DE)**

EP 0 343 513 B1

## Beschreibung

Die Erfindung betrifft eine Einrichtung zum Stabilisieren eines durch eine Schwächung in seinem Wandbereich instabilen Rohres eines Wärmetauschers, das vom Rohrboden des Wärmetauschers aus zugänglich ist, mit einer in das Rohr einfahrbaren Stange, die eine an der Rohrinnenwand anlegbare Spreizhülse trägt und relativ zur Spreizhülse verdrehbar ist.

Eine derartige Einrichtung ist aus der deutschen Patentanmeldung P 3735195.8-14 bekannt. Dort bringt die Spreizhülse zwar eine Stabilisierung des durchtrennten Rohres. Zur Erzielung eines dichten Verschlusses ist jedoch die zusätzliche Anbringung eines Verschlußstopfens erforderlich. Der verschiedentlich im Verlauf eines Wärmetauscherrohres differierende Innendurchmesser ist mit dem Spreizbereich des bekannten Stabilisators oftmals nicht zu überbrücken, so daß ein zuverlässiger Sitz nicht garantiert werden kann. Letztendlich behindert der als Zentriereinrichtung wirkende Finger den Spann- und Lösevorgang, da er sich beim Drehen des Spanndornes verhakt.

Es stellt sich die Aufgabe eine Einrichtung der eingangs genannten Art anzugeben, die neben einer Abdichtung des Strömungsweges eine vibrationsfreie Stabilisierung im Bereich der Wandschwächung ermöglicht.

Gelöst wird diese Aufgabe erfindungsgemäß dadurch, daß die Stange umfangsseitig mit wenigstens einer Kurvenscheibe mit in Umfangsrichtung ansteigenden Kurvenverlauf zu versehen ist, daß die Spreizhülse aus einem Grundkörper und in Achsrichtung von ihm auskragenden federnden Zungen besteht, daß die Spreizhülse gegen axiale Verschiebung gesichert ist und im Bereich ihrer Zungen die Kurvenscheibe übergreift, wobei die Zungen beim Einschieben in das Wärmetauscherrohr federnd an der Innenumfangsfläche des Rohres anliegen, daß die Stange an ihren dem Rohrboden des Wärmetauschers zugeordneten Ende zur Aufnahme eines Aufweitwerkzeuges hülsenförmig ausgebildet ist.

Durch die Verwendung von Kurvenscheiben wird ein größerer Durchmesserbereich mit stets gleichbleibender Spannkraft überbrückt. Mit der Rückstellkraft, die durch die federnde Ausbildung der Zungen der Spreizhülse erzielt wird, wird sichergestellt, daß beim Verdrehen der Stange ein Mitdrehen der Spreizhülse unterbleibt. Durch die hülsenförmige Ausbildung des unteren Stangenendes kann nach dem Spannen der Spreizhülse das untere Ende des Stabilisators im Rohrboden eingewalzt oder eingeschweißt werden. Mit dieser Maßnahme wird das Zurückdrehen des Stabes und damit ein Lösen der Spreizhülse verhindert und das Wärmetauscherrohr dicht verschlossen. Mit der Einbindung des Verschlußstopfens in die Stange des Stabilisators wird eine einfache und zuverlässige Einrichtung geschaffen. Ist es erforderlich, die Stopfen-Stabilisatorkombination wieder zu einem späteren Zeitpunkt auszubauen, so ist dies nach Aufhebung der Einwalzung oder der Einschweißung (z.B. durch "Shrinken" oder mechanische Bearbeitung) durch Drehen des Stabilisators in umgekehrter Richtung wie beim Einbau möglich.

Nach einer bevorzugten Ausgestaltung wird vorgesehen, daß die Stange zwei axial voneinander beabstandete Kurvenscheiben trägt, die eine geschwächte Stelle des Rohres zwischen sich aufnehmen.

Die Kurvenscheibe ist entweder in einem Bund der Stange eingearbeitet oder mit der Stange lösbar verbunden. Mit der lösbaren Verbindung läßt sich der Stabilisator für verschiedene Rohrdurchmesser einsetzen.

Zur Vergleichmäßigung der Andrückkraft ist vorgesehen, daß jede Kurvenscheibe mehrere Nocken gleicher Steigung aufweist.

Erhöht wird das gleichmäßige Andrücken der Spreizhülse noch dadurch, daß jeder Zunge eine Nocke zugeordnet ist.

Da die Länge des Stabilisators durch die Abmessung bzw. Konstruktion der Wasserkammer eines Wärmetauschers begrenzt sein kann wird vorgesehen, daß die Stange über ein Gelenk und eine Schiebehülse mit einem Verlängerungsstück verbindbar ist, wobei das Verlängerungsstück die Kurvenscheibe und/oder die hülsenförmige Ausnehmung aufnimmt.

Das erforderliche Mehrkant zur Aufnahme des Verdrehwerkzeuges für die Stange ist vorzugsweise vom Boden aus in die hülsenförmige Ausnehmung am unteren Ende des Stabilisators eingebracht.

Damit die Spreizhülse gegen axiale Verschiebung gesichert ist, greift ein der Spreizhülse zugeordneter Vorsprung in eine Nut der Stange ein.

Zur Verbesserung der Haftfähigkeit der Spreizhülse ist die Außenumfangsfläche der Zungen mit einer Aufrauhung versehen.

Anhand eines Ausführungsbeispieles und der schematischen Zeichnungen Figur 1 bis 6 wird die erfindungsgemäße Einrichtung beschrieben.

Dabei zeigt die

Figur 1    den unteren Bereich eines Wärmetauschers,
Figur 2    einen Stabilisator in seiner Längserstreckung,
Figur 3    einen Schnitt entlang der Linie III-III der Figur 2 in einem größeren Maßstab,

Figur 4    einen Schnitt entlang der Linie IV-IV der Figur 2 in einem größeren Maßstab,
Figur 5    einen Stabilisator in seiner Einbaulage und
Figur 6    eine Einzelheit VI der Figur 5 in einem größeren Maßstab.

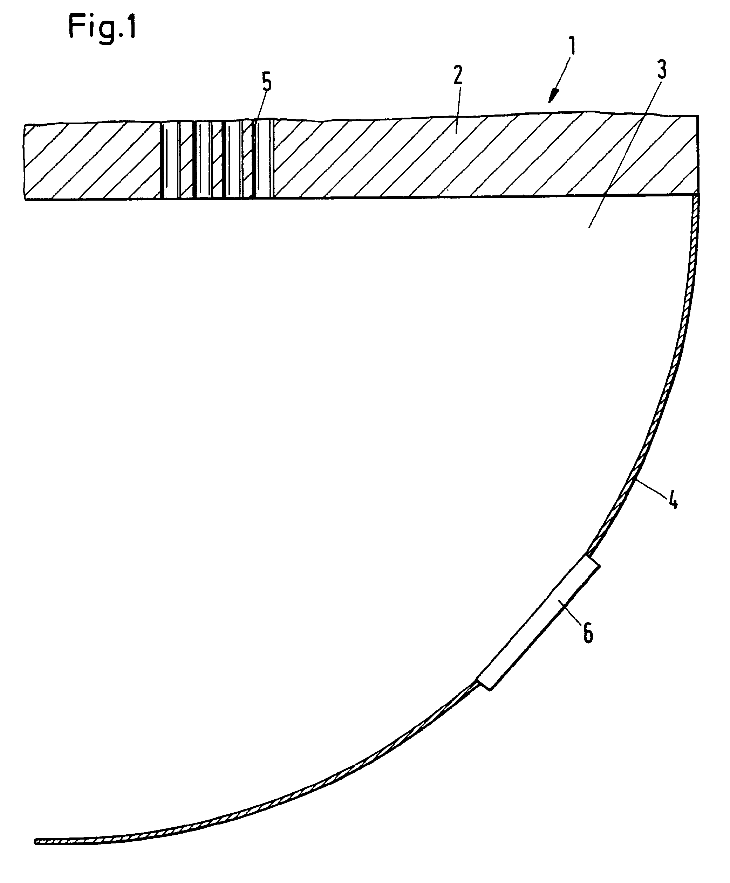

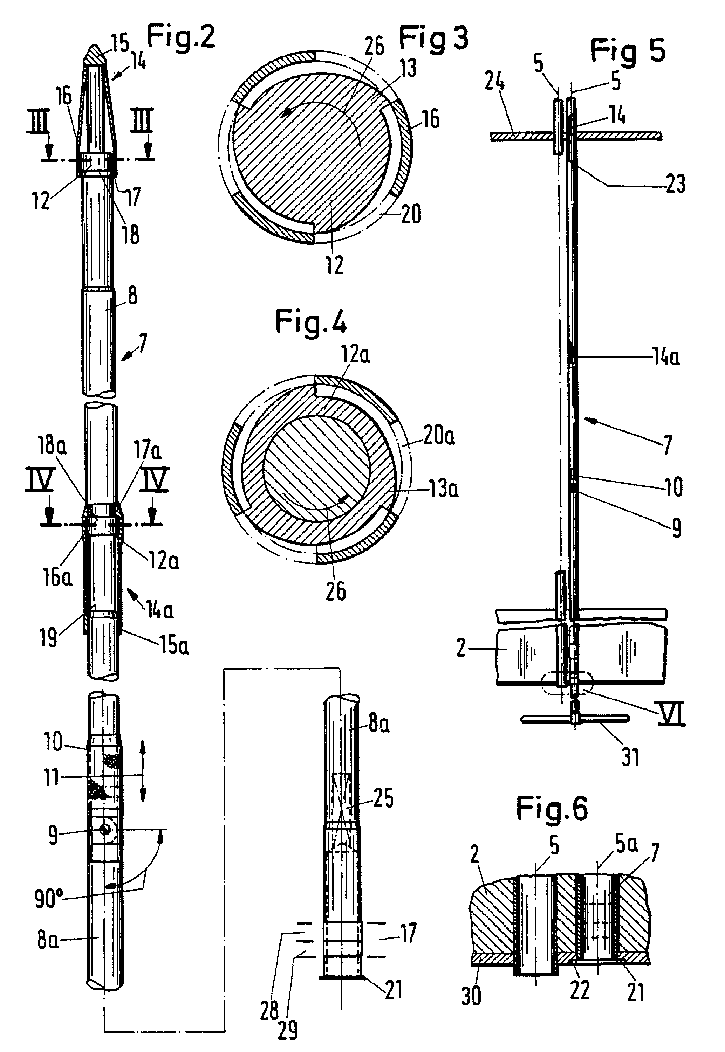

Die Figur 1 zeigt den unteren Bereich eines Wärmetauschers 1. Der Rohrboden 2 grenzt an eine Wasserkammer 3, die nach unten von einem halbkugelförmigen Boden 4 abgeschlossen ist. Im Rohrboden 2 endet eine Vielzahl von Rohren 5, wovon nur einige dargestellt sind. Soll ein oberhalb der Rohrplatte geschädigtes oder anderweitig geschwächtes Rohr stillgesetzt werden, bis bei einer späteren Revisionsphase seine Reparatur bzw. sein Ausbau erfolgen kann, so wird durch das Mannloch 6 ein in der Figur 2 dargestellter Stabilisator 7 in die Wasserkammer 3 eingebracht und in das geschädigte Rohr eingeführt, um ein Ausschlagen des geschädigten Rohres beim Betrieb des Wärmetauschers zu vermeiden.

Der in der Figur 2 in Längserstreckung dargestellte Stabilisator 7 besteht aus einer Stange 8, die über ein Gelenk 9 um 90° abgeknickt werden kann. Mit dieser Abknickung, die auch an mehreren Stellen der Stange angebracht sein kann, ist unabhängig von den Abmessungen der Wasserkammer das Einbringen von Stabilisatoren jeder Länge möglich. Nachdem der obere Teil des Stabilisators 8 in das Rohr 5 eingeschoben ist, wird das Verlängerungsstück 8a nach unten geklappt und eine Schiebehülse 10 in Pfeilrichtung 11 nach unten geschoben. Mit dieser Sicherung ist eine dreh- und zugfeste Verbindung hergestellt, die ein weiteres Einfahren des Stabilisators 7 in das durchtrennte Rohr ermöglicht. Der Stabilisator kann selbstverständlich auch ohne abknickbare d.h. mit einer einstückigen Stange 8 ausgebildet sein.

Die Stange 8 trägt an zwei axial beabstandeten Stellen je eine Kurvenscheibe 12, 12a, die nach Figur 3 und 4 drei mit gleichem Abstand am Umfang verteilte Nocken 13 aufweist. Jede Nocke 13 weist einen gleichmäßigen ansteigenden Kurvenverlauf auf. Während nach der Figur 3 die Kurvenscheibe 12 unmittelbar in einen Bund der Stange 8 eingearbeitet ist, ist die Kurvenscheibe 12a lösbar mit der Stange 8 verbunden. Wie aus dem oberen Ende der Figur 2 in Zusammenhang mit der Figur 3 zu ersehen ist, ist die Kurvenscheibe 12 von einer Spreizhülse 14 übergriffen. Die Spreizhülse 14 besteht aus einem Grundkörper 15, der in diesem Fall zum erleichterten Einführen des Stabilisators spitz zulaufend ausgebildet ist und aus drei Zungen 16, die in Achsrichtung der Stange 8 von dem Grundkörper 15 auskragen. An ihrem die Kurvenscheibe 12 übergreifenden Ende weisen die Zungen 16 klauenförmige Vorsprünge 17 auf, die in eine Nut 18 der Stange 8 ragen und eine Lagesicherung der Spreizhülse 14 bewirken. Der axial beabstandeten Kurvenscheibe 12a ist ebenfalls eine sie übergreifende Spreizhülse 14a zugeordnet. Der Grundkörper 15a reicht hier etwa bis zur Kante 19, während sich vom Grundkörper 15a aus in Richtung der Kurvenscheibe 12a die Zungen 16a bis über die Kurvenscheibe 12a erstrecken. Die freien Enden der federnd ausgebildeten Zungen 16a sind auch hier als Vorsprünge 17a ausgebildet, die in jeder Stellung der Zungen in eine Nut 18a ragen und damit gegen axiales Verschieben gesichert sind. Die Zungen 16a der Spreizhülse 14a sind in der Figur 4 im Querschnitt dargestellt.

Zu erkennen ist sowohl in der Figur 3 als auch in der Figur 4, daß zwischen den einzelnen Zungen 16, 16a ein Spalt 20, 20a besteht, der bis zum Grundkörper 15, 15a reicht. Jeder Zunge ist ein Nocken 13 zugeordnet, so daß die Spreizhülse mit einer gleichmäßigen Andrückkraft an der Innenwand des Rohres 5 zur Anlage kommt. Der Außendurchmesser der Spreizhülse 14, 14a ist im Bereich der Zungen so gewählt, daß die Spreizhülse beim Einschieben in das Wärmetauscherrohr elastisch zusammengedrückt wird. Durch diese Rückstellkraft (Federkraft) entsteht eine Anpreßkraft der Spreizhülse zum Wärmetauscherrohr. Der Reibwiderstand zwischen den federnd an der Rohrinnenwand anliegenden Zungen und der Rohrinnenwand ist dabei so groß, daß beim Verdrehen der Stange 8 relativ zur Spreizhülse die Spreizhülse am Mitdrehen gehindert wird. Durch eine Aufrauhung der Zungenoberfläche wird sowohl die Reibkraft beim Spannvorgang als auch die Haltekraft nach erfolgtem Spreizvorgang erhöht.

Der axiale Abstand der Kurvenscheiben 12, 12a zueinander ist so gewählt, daß nach dem Einschieben des Stabilisators 7 bis zur Anlage seines Bördelrandes 21 an eine freigearbeitete Fläche 22 des Rohrbodens 2 eine zu stabilisierende Schadstelle 23 auf jeden Fall zwischen den Spreizhülsen 14, 14a zu liegen kommt (Figur 2, 5 und 6). Die Figur 5 zeigt einen Teilbereich des Rohrbodens 2 und eines oberhalb des Rohrbodens angeordneten Abstandshalters 24 mit zwei von mehreren tausend Wärmetauscherrohren 5 eines Wärmetauschers 1. In eines der beiden Rohre ist ein Stabilisator 7 bis zum Bördelrand 21 eingefahren. Die obere Spreizhülse 14 ist dicht oberhalb der Schadstelle 23 plaziert, während die zweite Spreizhülse 14a in einem größeren Abstand unterhalb der Schadstelle 23 angeordnet ist. Unterhalb der Spreizhülse 14a ist das Gelenk 9 mit der Schiebehülse 10 zu erkennen. Ein Verdrehwerkzeug 31 greift in ein Mehrkant 25 der Stange 8 (Figur 2) ein. Durch Drehung der Stange 8 in Pfeilrichtung 26 (Figur 3 und 4) erfolgt über die Nocken 13 ein Andrücken der Zungen 16, 16a an die Innenwand des Rohres 5 und zwar mit einer die Anfederung der Zungen weit übersteigenden Andrückkraft.

Nachdem die Spreizhülse verspannt sind erfolgt zur Sicherung ihrer stabiliserenden Lage und zur Abdichtung des Rohres ein Einwalzen des unteren Stangenendes im Bereich des Rohrbodens 2. Hierzu ist das untere Ende der Stange 8 hülsenförmig ausgebildet. Zur Erzielung einer einwandfreien Verbindung besteht die Einwalzzone 27 der Stange 8 aus einem Oberflächenbereich 28 mit einer geringeren und einem Oberflächenbereich 29 mit einer größeren Oberflächenhärte als sie das Rohr 5 aufweist. Da der Oberflächenbereich 29 zusätzlich noch eine Aufrauhung aufweist, entsteht neben der kraftschlüssigen Verbindung zwischen dem Oberflächenbereich 28 und dem Rohr 5 noch eine formschlüssige Verbindung zwischen dem Oberflächenbereich 29 und dem Rohr 5.

Die Figur 6 zeigt in einem größeren Maßstab den Rohrboden 2 mit einem unbeschädigten Rohr 5, das ein bestimmtes Maß über eine Plattierung 30 hinausragt und ein mit einem Stabilisator 7 versehenes Rohr 5a. Um eine ebene Anlagefläche für den Börderlrand 21 des Stabilisators zu erhalten, muß das überstehende Rohrteil abgearbeitet werden, bis eine Fläche 22 an der Plattierung 30 entsteht. Das Mehrkant 25 zur Aufnahme des Verdrehwerkzeuges 31 erstreckt sich vom Boden des hülsenförmig ausgebildeten Endes der Stange 8 in axialer Richtung nach oben.

## Patentansprüche

1. Einrichtung zum Stabilisieren eines durch eine Schwächung in seinem Wandbereich instabilen Rohres (5) eines Wärmetauschers (1), das vom Rohrboden (2) des Wärmetauschers aus zugänglich ist, mit einer in das Rohr (5) einfahrbaren Stange (8) die eine an der Rohrinnenwand anlegbare Spreizhülse (14) trägt und relativ zur Spreizhülse verdrehbar ist, dadurch gekennzeichnet, daß die Stange (8) umfangsseitig mit wenigstens einer Kurvenscheibe (12, 12a) mit in Umfangsrichtung ansteigendem Kurvenverlauf versehen ist, daß die Spreizhülse (14, 14a) aus einem Grundkörper (15, 15a) und in Achsrichtung von ihm auskragenden Zungen (16, 16a) besteht, daß die Spreizhülse gegen axiale Verschiebung gesichert ist und im Bereich ihrer Zungen die Kurvenscheibe übergreift, wobei die Zungen beim Einschieben in das Wärmetauscherrohr federnd an der Innenumfangsfläche des Wärmetauscherrohrs anliegen und daß die Stange (8) an ihrem dem Rohrboden (2) des Wärmetauschers (1) zugeordneten Ende zur Aufnahme eines Aufweitwerkzeuges hülsenförmig ausgebildet ist.

2. Einrichtung nach Anspruch 1, dadurch gekennzeichnet, daß die Stange (8) zwei axial zueinander beabstandete Kurvenscheiben (12, 12a) trägt, die eine Schadstelle (23) des Rohres (5) zwischen sich aufnehmen.

3. Einrichtung nach Anspruch 1 oder 2, dadurch gekennzeichnet, daß die Kurvenscheibe (12) in einem Bund der Stange (8) eingearbeitet ist.

4. Einrichtung nach Anspruch 1 oder 2, dadurch gekennzeichnet, daß die Kurvenscheibe (12a) mit der Stange (8) lösbar verbunden ist.

5. Einrichtung nach einem der Ansprüche 1 bis 4, dadurch gekennzeichnet, daß jede Kurvenscheibe (12, 12a) mehrere Nocken (13) gleicher Steigung aufweist.

6. Einrichtung nach einem der Ansprüche 1 bis 5, dadurch gekennzeichnet, daß jeder Zunge (16, 16a) der Spreizhülse (14, 14a) eine Nocke (13) zugeordnet ist.

7. Einrichtung nach einem der Ansprüche 1 bis 6, dadurch gekennzeichnet, daß die Stange (8) über ein Gelenk (9) und eine Schiebehülse (10) mit einem Verlängerungsstück (8a) verbindbar ist, wobei das Verlängerungsstück die Kurvenscheibe (14a) und/oder die hülsenförmige Ausnehmung aufnimmt.

8. Einrichtung nach einem der Ansprüche 1 bis 7, dadurch gekennzeichnet, daß vom Boden der hülsenförmigen Ausnehmung aus in axialer Erstreckung der Stange (8) ein Mehrkant (25) zur Aufnahme eines Verdrehwerkzeuges (31) eingebracht ist.

9. Einrichtung nach Anspruch 1, dadurch gekennzeichnet, daß die Außenumfangsfläche der Zungen (16, 16a) mit einer Aufrauhung versehen ist.

10. Einrichtung nach Anspruch 1, dadurch gekennzeichnet, daß ein der Spreizhüle (14, 14a) zugeordneter Vorsprung (17, 17a) in eine Nut (18, 18a) der Stange (8a) eingreift.

## Claims

1. Apparatus for the stabilising of a tube (5) of a heat exchanger (1), which tube is unstable due to a weakening in its wall region and is accessible from the tube sheet (2) of the heat exchanger, with a rod (8), which can be entered into the tube (5), bears a spreading sleeve (14) capable of bearing against the tube inner wall and is rotatable relative to the spreading sleeve, characterised in that the rod (8) is provided circumferentially with at least one cam disc (12, 12a) with curve profile rising in circumferential direction, in that the spreading sleeve (14, 14a) consists of a basic body (15, 15a) and tongues (16, 16a) jutting out from it in axial direction, in that

4

the spreading sleeve is secured against axial displacement and engages over the cam disc in the region of its tongues, the tongues bearing resiliently against the inner circumferential surface of the heat exchanger tube during pushing-in into the heat exchanger tube, and in that the rod (8) is designed in the form of a sleeve at its end assigned to the tube sheet (2) of the heat exchanger (1), for the receiving of an expanding tool.

2. Apparatus according to Claim 1, characterised in that the rod (8) bears two axially spaced-apart cam discs (12, 12a), which receive a point of damage (23) of the tube (5) between them.

3. Apparatus according to Claim 1 or 2, characterised in that the cam disc (12) is worked into a collar of the rod (8).

4. Apparatus according to Claim 1 or 2, characterised in that the cam disc (12a) is detachably connected to the rod (8).

5. Apparatus according to one of Claims 1 to 4, characterised in that each cam disc (12, 12a) has a plurality of cams (12) of the same pitch.

6. Apparatus according to one of Claims 1 to 5, characterised in that each tongue (16, 16a) of the spreading sleeve (14, 14a) is assigned a cam (13).

7. Apparatus according to one of Claims 1 to 6, characterised in that the rod (8) can be connected via a joint (9) and a sliding sleeve (10) to an extension piece (8a), the extension piece receiving the cam disc (14a) and/or the sleeve-shaped clearance.

8. Apparatus according to one of Claims 1 to 7, characterised in that a polyhedron (25) for receiving a turning tool (31) is fitted from the base of the sleeve-shaped clearance in axial extent of the rod (8).

9. Apparatus according to Claim 1, characterised in that the outer circumferential surface of the tongues (16, 16a) is provided with a roughening.

10. Apparatus according to Claim 1, characterised in that a projection (17, 17a), assigned to the spreading sleeve (14, 14a), engages into a groove (18, 18a) of the rod (8a).

## Revendications

1. Dispositif pour la stabilisation d'un tube (5) d'un échangeur de chaleur (1) rendu instable par un affaiblissement dans la zone de sa paroi, accessible à partir de la plaque tubulaire (2) de l'échangeur de chaleur, comportant une tige (8) pouvant être introduite à l'intérieur du tube (5), qui porte une douille expansible (14) pouvant être appliquée contre la paroi intérieure du tube et qui peut tourner par rapport à la douille expansible, caractérisé en ce que la tige (8) est munie à sa périphérie d'au moins une came (12, 12a) avec un profil de came croissant dans la direction tangentielle, en ce que la douille expansible (14, 14a) se compose d'un corps principal (15, 15a) et de languettes (16, 16a) s'étendant à partir de celui-ci dans la direction axiale, en ce que la douille expansible est immobilisée contre tout déplacement axial et entoure la came dans la zone de ses languettes, les languettes venant en appui sur la surface périphérique intérieure du tube d'échangeur lors de leur introduction dans le tube et en ce que la tige (8) est réalisée en forme de manchon pour recevoir un élargisseur à son extrémité associée à la plaque tubulaire (2) de l'échangeur de chaleur (1).

2. Dispositif selon la revendication 1, caractérisé en ce que la tige (8) comporte deux cames (12, 12a) disposées à une certaine distance axiale l'une de l'autre, qui entourent un point défectueux (23) du tube (5).

3. Dispositif selon la revendication 1 ou 2, caractérisé en ce que la came (12) est usinée dans un collet de la tige (8).

4. Dispositif selon la revendication 1 ou 2, caractérisé en ce que la came (12a) est reliée de manière démontable à la tige (8).

5. Dispositif selon l'une des revendications 1 à 4, caractérisé en ce que chaque disque à came (12, 12a) comporte plusieurs cames (13) de même pente.

6. Dispositif selon l'une des revendications 1 à 5, caractérisé en ce qu'une came (13) est associée à chaque languette (16, 16a) de la douille expansible (14, 14a).

7. Dispositif selon l'une des revendications 1 à 6, caractérisé en ce que la tige (8) peut être reliée à un élément rallonge (8a) par l'intermédiaire d'une articulation (9) et d'un manchon coulissant (10), l'élément rallonge recevant le disque à came (14a) et/ou l'évidement en forme de manchon.

8. Dispositif selon l'une des revendications 1 à 7, caractérisé en ce qu'un polygone (25) s'étend dans la direction axiale de la tige (8) à partir du fond de l'évidement en forme de manchon pour la mise en place d'un outil de rotation (31).

9. Dispositif selon la revendication 1, caractérisé en ce que la surface périphérique extérieure des languettes (16, 16a) est rugueuse.

10. Dispositif selon la revendication 1, caractérisé en ce qu'une saillie (17, 17a) associée à la douille expansible (14, 14a) s'engage dans une gorge (18, 18a) de la tige (8a).

# Fig.1

Fig.2

Fig 3

Fig 5

Fig.4

Fig.6